# EUROPEAN PATENT SPECIFICATION

(11) **EP 2 604 554 B1**
(45) Date of publication and mention of the grant of the patent: **27.04.2016**
(21) Application number: 12197232.7
(22) Date of filing: 14.12.2012
(51) Int. Cl.: B65G 47/58, B65G 47/72, B65G 65/48

(54) **Drum dispenser**
Trommelspender
Distributeur de tambour

(30) Priority: 16.12.2011 DK 201170716
(43) Date of publication of application: 19.06.2013
(73) Proprietor: Simatek Bulk Systems A/S, 4270 Hong (DK)
(72) Inventor: Larsen, Torben Drost, 4281 Gørlev (DK)
(74) Representative: Gregersen, Niels Henrik

(56) References cited:
- DE-A1- 3 332 861
- GB-A- 663 493
- GB-A- 2 205 547
- JP-A- 61 263 528
- JP-U- H0 338 465
- JP-U- 48 048 388

## Description

### Field of the Invention

The present invention concerns a cup conveyor including an apparatus for filling cups in a cup conveyor, wherein the cups are interconnected and arranged juxtaposed and thus constitute an endless conveyor belt, wherein a cup at least includes an upwardly facing opening, two opposing end faces and one or more bottom faces and/or side faces, wherein in the direction of movement of the conveyor belt along the extension of the cup the opening has a leading edge and a trailing edge extending transversely to the direction of movement of the conveyor belt, which is typically substantially horizontal during filling of the cups, wherein the apparatus further includes a filling station with an adjustable dosing device from which the material is supplied to the cups via a chute system during their passage of the filling station. The invention furthermore concerns a method for using an apparatus, wherein the method includes filling cups of a cup conveyor, wherein at conveyor belt moves in a direction of movement at a given speed, wherein a dosing device at a filling station doses a matching flow of material.

### Background of the Invention

When conveying loose material such as e.g. granulate, animal feed, cereals and similar it is very common to use so-called cup conveyors. The cups, which are typically made of a suitable type of plastic, are moved in an endless path between a filling station and an emptying station, and are distinguished by being pivotably suspended about a horizontal axis so that they always have the opening facing upwards. Filling of such cups is typically effected by letting the cups pass under a filling station with a chute and a dosing device. The dosed material slides down the chute in a continuous flow and down into the cup. The amount of dosed material is typically controlled by a damper or other suitable regulating mechanism in the dosing device. The degree of filling of individual cups is controlled by how much material is dosed per time unit compared with how fast the cups pass the filling station. In order to achieve optimal utilisation of such a cup conveyor it is desirable that the cups are filled sufficiently during the passage of the filling station. The speed at which the cups pass the filling station and the amount of the dosed material per time unit can be adjusted so that optimal filling of the cups is achieved while at the same time the desired amount of material is moved.

This form of filling, however, implies a problem as the material tends to accumulate at the trailing edge of the cup as seen in the direction of movement. This accumulation causes the cup to be unbalanced and possibly overturn at the subsequent vertical transport. Another problem is that the filling degree of the cups is reduced hereby. By low filling degree the system has to run more (i.e. for a longer time) or faster than if the filling degree is high, causing more wear and thus more maintenance on the system as such.

As the material is supplied to the cups in a continuous stream and in order to avoid spilling between the cups during filling, it is normal that the cups have an overlap at both ends. The overlapping parts of adjacent cups lie above and below each other, respectively. This overlapping, however, introduces some problems. Typically, some of the material will settle upon this overlap and have a tendency of being squeezed between the overlapping parts of two cups, causing damage to the cups or crushing of the material which becomes unwanted dust. Furthermore, these overlapping parts give rise to problems when the cups are to change direction of movement, e.g. from horizontal to vertical. In such a situation it is required that the overlapping parts of respective cups are disposed correctly in relation to each other such that the cup will not overturn when changing conveying direction from horizontal to vertical, or vice versa. In the worst case a wrong disposition will result in breaking of a cup and that the facility has to be stopped for replacing the broken cup. In order to avoid or at least limit these problems, such facilities are equipped with shifters which can determine which of the overlapping ends of the cups are to be at the top. If this overlap by the cups can be dispensed with, the mentioned shifters can be obviated in the system, and there will be a marked reduction in wear on the cups as they no longer need to be in direct mutual contact. By obviating overlapping between the cups and thereby also the shifters, such a system would be cheaper as well as more reliable.

Examples of rotary dispensers, e.g. for use with cup conveyors are disclosed in JP 61-263528 A which discloses the preamble of claim 1, JP H03-038465 A, DE 3332861 A1 and GB 663493 A.

From DE 218608 is known a system wherein the cups are arranged without overlapping and where the material is supplied to a rotating lock wherein the material is fed to a compartment at the periphery of this lock and which is subsequently rotated and gradually emptied according to the rotation. The material is first measured - supplied to the compartment in the lock - and subsequently emptied into the cup. As the lock is rotated, the material is "dumped" and falls down into the cup in an uncontrolled stream. By this emptying which starts well above the upwardly facing opening of the cup and which is only finished after rotating at least 90°, there is a great risk that material from an overfilled compartment falls beside the cup. Moreover, this can be both dusty and damaging, rough treatment of the material. This is due to the design as the material is not conducted via any kind of chutes or the like for the cup and actually released from the lock at a rather great height above the cup, a reason why the apparatus according to DE 218608 leaves something to be desired.

Furthermore, there is the fact that if increased capacity is wanted it is not possible immediately to increase the rotary speed of the lock and the conveying speed of the cups as this will entail that the material in the lock is almost thrown out of the latter. Hereby an even greater spillage or loss of material will arise.

A further drawback of the solution as indicated in DE 218608 is that the material dosed and supplied to the cups via the lock very easily may get pinched between the rotating lock and the area at which the material is accumulated in front of the lock. Some of the material is hereby unavoidably crushed hereby, causing waste, and in some cases crushed material is entirely unwanted, being decisive as to whether the material can be used or not. At the same time this fact also entails an unacceptably extensive wear on the machine parts in contact with the material when the latter is crushed. It is therefore a great disadvantage that the apparatus is arranged such that material is accumulated in front of the rotating lock.

In principle, DE 218608 indicates a solution wherein the material is measured in a compartment and supplied to a cup. Thus there is no possibility of increasing the capacity beyond a given amount per time unit which is determined by the size of the compartment and the rotary speed of the lock which is subject to certain limitations as described above.

### Object of the Invention

It is the object of the invention to indicate an apparatus which can fill the material into a continuously conveyed number of cups of a cup conveyor, wherein by the apparatus there is achieved a minimal spilling between cups, wherein the material is dosed carefully and precisely, and thus wherein there is no longer need for overlapping between two adjacent cups.

### Description of the Invention

As mentioned in the introduction, the invention concerns a cup conveyor according to claim 1 comprising an apparatus for filling of the cups wherein the cups are interconnected and arranged juxtaposed and thus constitute an endless conveyor belt, wherein a cup at least includes an upwardly facing opening, wherein the apparatus further includes a filling station with an adjustable dosing device from which the material is supplied to the cups via a chute system during their passage of the filling station.

The features of an apparatus according to the invention are that the filling station of the apparatus includes a rotatable dispenser arranged above the cups, that means for supplying material are arranged at the centre of the rotatable dispenser, that the rotatable dispenser includes a rotary drum comprising at one dosing or more apertures for dosing material into a cup and a chute at each side of the one or more dosing apertures, and where the wall of the drum, or at least a part thereof forms a chute for the material between a dosing aperture and a subsequent dosing aperture, which chutes extends more or less down into a passing cup. The apparatus further includes drive means and means for controlling and regulating the at least one dosing aperture and the chutes in the rotatable dispenser in relation to the positions of the openings in adjacent cups and a trailing edge and a leading edge of two adjacent cups at the filling station, so that the chutes covers the gap existing between two cups in succession when the apparatus is in operation.

As also mentioned in the introduction, the invention furthermore concerns a method according to claim 8 for using an apparatus, wherein the method includes filling cups of a cup conveyor, wherein at conveyor belt moves in a direction of movement at a given speed, wherein a dosing device at a filling station doses a matching flow of material.

The method according to the invention includes at least the following steps:
- cups connected with a conveyor belt are moved past a dosing device with a rotatable dispenser with at one or more dosing apertures;
- the rotatable dispenser is rotated concurrently with the position of the cups and so that the dosing aperture or each of the dosing apertures of the rotatable dispenser is always opposite an opening of a cup and so that a leading edge of one cup and the trailing edge of another, adjacent cup are covered by the chute system of the dosing device;
- material is dosed via a specific dosing aperture and supplied to a cup at a specific position.

By such an apparatus and such a method there is achieved a clear advantage by the way in which the material is conducted into respective cups on the conveyor. By using a rotating dispenser with one or more dosing apertures wherein the dosing apertures are controlled such that a dosing aperture more or less follows an opening in a passing cup, it is ensured that the material to be conveyed is conducted directly into a specific cup. In other words there is no longer a continuous flow of material which is conducted down over the passing cups via a chute. By the invention, the material is fed directly to a cup with a kind of rotating spout as the dosing apertures itself follows the cup a distance while dosing is performed. In a preferred variant, the dosing aperture is one of several on a rotating unit which can be characterised as a drum rotating about an axis which is transverse to the direction of movement of the conveyor and thereby of the cups. The drum may advantageously be with more than one dosing aperture; for example there may be two, three, four, five, six or more dosing apertures at the periphery of the drum. The material to be transported is supplied to the interior of the drum via one or more access channels, and one or more kinds of material can be supplied which are mixed by means of the rotatable dispenser, if not before then at the time when the material enters the cup.

By feeding the material into the interior of the drum - at the centre of the rotatable dispenser - there is achieved the great advantage that the material is not accumulated in front of any moving, rotatable part, and therefore is not exposed to being crushed and destroyed. In an apparatus according to the invention there are no narrow slots in which the material can be crushed, to the contrary there is a relatively large distance between the outlet from one or more access channels and to the rotating dispenser with dosing apertures in the periphery.

Between two individual dosing apertures in a rotatable dispenser there is an external periphery - a wall - in the said drum, the wall, or at least part thereof, forming a chute for the material at a dosing aperture and at a subsequent dosing aperture. At each side of a dosing aperture there is thus a chute which more or less extends down into a passing cup during the filling of the latter with material when the rotatable dispenser is rotated concurrently with the conveyor with the cups being moved by.

As mentioned, the chute has the advantage and function that it conducts the material in place in a cup and furthermore acts as a movable/rotating screen covering the area between two cups such that a certain spacing can exist between the cups without any problems. Hereby is achieved the great advantage that there is no need for the hitherto known and problematic overlap between cups in the prior art cup conveyors.

In the Figures which are described below, the function and a preferred way of performing the invention will be discussed in details, and the invention will hereby appear even more clearly.

In a preferred variant of an apparatus and a method according to the invention, the drive means for rotating the rotatable dispenser can include either an electric motor, a pneumatic or a hydraulic motor, wherein the drive means are controlled and/or regulated relative to the cups in the conveyor belt based on input from one or more electric or mechanical sensors and/or switches such that the position of the dosing aperture is in step with the opening of a passing cup. Hereby is achieved that a dosing aperture is always opposite an opening of a cup and not the least that the gap - the above mentioned movable/rotatable screen - always covers the gap existing between two cups in succession. The fact that this gap is covered provides that the cups can do without the known overlap, meaning a simplified and thereby cheaper conveyor by which there are not the same risks of cups not being arranged correctly in relation to each other, and furthermore there is no risk that material is squeezed or crushed between the cups as there is no direct connection between the edges of the cups. A further advantage of using the invention with a rotating dispenser is that less material is wasted due to the much more precise and gentle delivery of material into a cup.

An apparatus according to the invention may advantageously be adapted such that the rotatable dispenser is directly or indirectly mechanically connected with the conveyor belt via one or more gear wheels. There may be a gear wheel disposed at the periphery of the rotating dispenser engaging one of the chains between which all cups in the conveyor are arranged. Such a chain is typically a long-linked steel chain to which the cups are fastened with a journal, a pin or the like such that a given cup is always free to pivot about the pin or similar. There may be one gear wheel, or gear wheels at respective ends of the rotatable dispenser, the gear wheels engaging each their chain. In that way the forces are evenly distributed between the two chains.

Moreover, it is possible to connect the rotatable dispenser mechanically in a more indirect way to one or to both chains on the cup conveyor. It may e.g. be with further gear wheels, with a chain, or alternatively with a toothed belt or other by which it is easy to ensure that the rotatable dispenser is synchronised and in step with the position of the cups.

In a variant of an apparatus according to the invention, the rotatable dispenser can appear drum-like and be suspended by at least two support bearings at one or at either side of the conveyor belt, such that the drum/rotatable dispenser has a rotary axis transversely to the conveyor belt. Hereby is achieved possibility of avoiding bearing structures at the centre of the drum and simultaneously achieve a simple and robust design. The drum can be designed with a kind of groove along the periphery which can be disposed without additional mechanical challenges over the support bearings, which in their simplest form can be constituted by a pair of wheels or roller bearings. A third or maybe a fourth support bearing may be provided in addition according to need, and by using three or more evenly distributed support bearings there is further achieved the advantage that the drum is secured at the desired position and only allowed to rotate in step with the passage of the cups.

However, it is possible to equip an apparatus according to the invention with centrally positioned bearings at at least one of the ends of the drum/rotatable dispenser such that at at least one side of the conveyor there is provided a bearing and such that the drum/rotatable dispenser is provided a rotary axis transversely to the conveyor.

In a variant of an apparatus according to the invention, the rotatable dispenser includes one or more controllable dampers and one or more access channels, wherein the access channel or channels is/are arranged at the end or ends of the rotatable dispenser. Hereby is achieved the possibility to regulate how much material is to be supplied to the rotatable dispenser. There may e.g. be two access channels and two individually adjustable dampers with which are achieved the possibility of feeding two different materials in each their amount to the same rotatable dispenser, wherein a mixing of the two materials then takes place.

In a particularly preferred embodiment of an apparatus according to the invention, the conveyor belt includes a plurality of juxtaposed cups, wherein between a leading edge of one of the cups and a trailing edge of another cup disposed in front thereof there is a spacing, e.g. a spacing of 5 to 10 mm. A lesser as well as a greater spacing is possible, depending on the respective conditions by the apparatus. As mentioned above, hereby is achieved the advantage that the cups do not need to be controlled such that an edge of one cup lies over an adjacent edge of an adjacent cup, which, among others, means certain mechanical challenges when a cup conveyor changes its direction of movement from horizontal and to vertical or inclined transport and back to horizontal. Furthermore, there is a rather large wear on such overlapping edges which therefore are prone to be worn out or break off, meaning that the entire plant has to be stopped and the defective cup or cups are to be replaced.

A particularly preferred embodiment of an apparatus according to the invention is designed such that the conveyor belt includes at least one drive chain or one drive belt, that the juxtaposed cups are fixed to this drive chain or drive belt, that the rotatable dispenser includes other drive means for direct engagement with the drive chain or drive belt. In this way is achieved the most direct control and synchronisation of the apparatus. There may e.g. be arranged a number of cups on an endless chain why a cup is mounted for every twentieth chain link. A chain wheel directly engaging the chain can be arranged on the rotating dispenser, and a dosing aperture is arranged at every twentieth tooth on the gear wheel. There is thus always an opening in a cup present when a dosing aperture is in position above a such.

In the following, a specific variant of the invention will be discussed with reference to the drawing wherein various Figures show details of the invention.

### Description of the Drawing

The invention is described in the following with reference to the drawing, wherein:
- Fig. 1: shows a detail of a cup conveyor with a rotatable dispenser;
- Fig. 2: shows the same as Fig. 1, but in a longitudinal section;
- Fig. 3: shows a rotatable dispenser as seen from the side and with closed damper;
- Fig. 4: shows a rotatable dispenser as seen from the side and with open damper;
- Fig. 5: shows material flow at a first position in a rotatable dispenser;
- Fig. 6: shows material flow at a second position in a rotatable dispenser;
- Fig. 7: shows material flow at a third position in a rotatable dispenser;
- Fig. 8: shows material flow at a fourth position in a rotatable dispenser;

In the explanation of the Figures, identical or corresponding elements will be provided with the same designations in different Figures. Therefore, no explanation of all details will be given in connection with each single Figure/embodiment.

### Detailed Description of Embodiments of the Invention

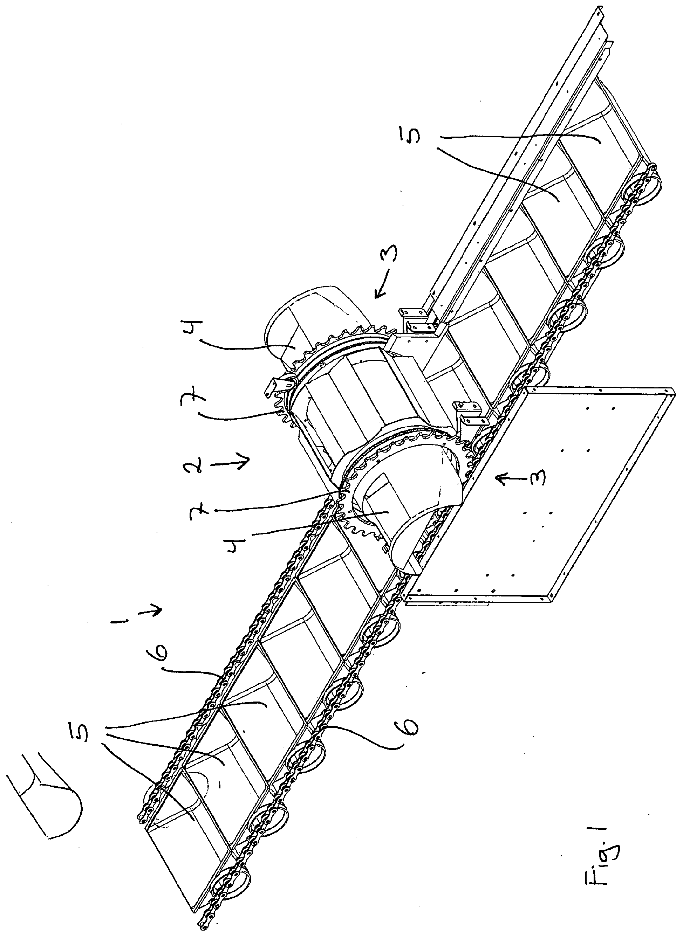

Fig. 1 shows a detail of a cup conveyor 1 with a rotatable dispenser 2. At the ends 3 of the rotatable dispenser 2 appear access channels 4 for material to be dosed to the cups 5. The cups 5 are arranged between two long-linked steel chains 6 in such a way that the individual cup is free to pivot about the axis at which it is fixed to the chains 6. The cup conveyor 1 is driven by not shown drive means and the chains are typically guided in rails or on wheels which are not shown on the Figure either. At the ends 3 of the rotatable dispenser 2 are seen two gear wheels 7, each directly engaging a long-linked steel chain 6. This direct mechanical engagement between gear wheels 7 and steel chain 6 entails that the rotatable dispenser 2 is driven concurrently with driving the cup conveyor 1.

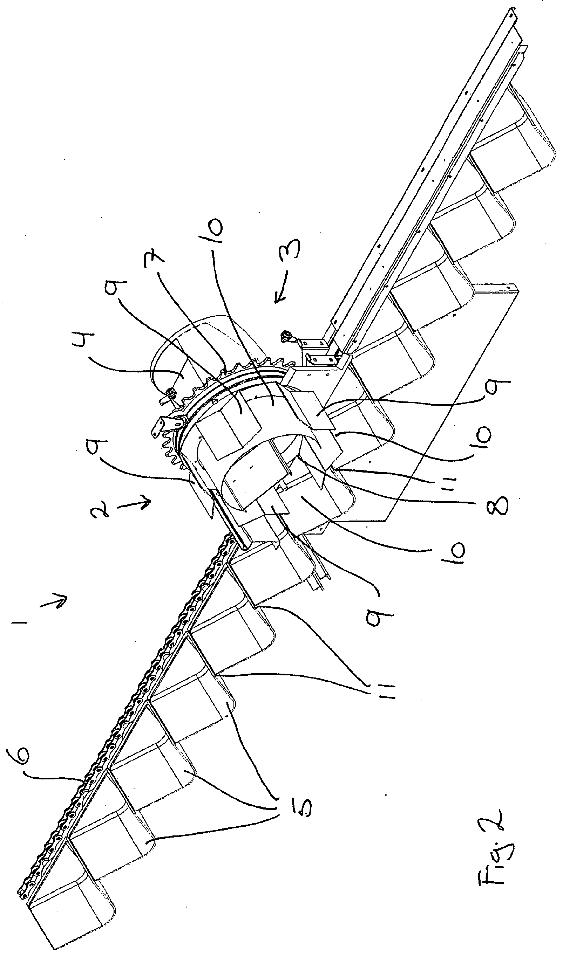

Fig. 2 shows in principle the same as Fig. 1, but here in longitudinal section. The cups 5 as well as the rotatable dispenser 2 are thus seen in section in longitudinal direction of the cup conveyor. In this Figure it is particularly the rotatable dispenser 2 that appears more clearly. Internally of the rotatable dispenser 2 appears here an open damper 8 why the material fed into the access channels 4 flows directly out on the chutes 9 and out through the dosing apertures 10 facing downwards and directed towards a cup 5. In the shown embodiment there are five dosing apertures 10, and between these there are five double chutes 9 in the sense that each chute 9 has one portion which in principle is directed straight or angled towards one dosing aperture 10 at one side and another portion directed or angled towards another dosing aperture 10 at another side in relation to the chute 9. It further appears from the Figure that the gap 11 between two adjacent cups 5 is covered by a chute 9.

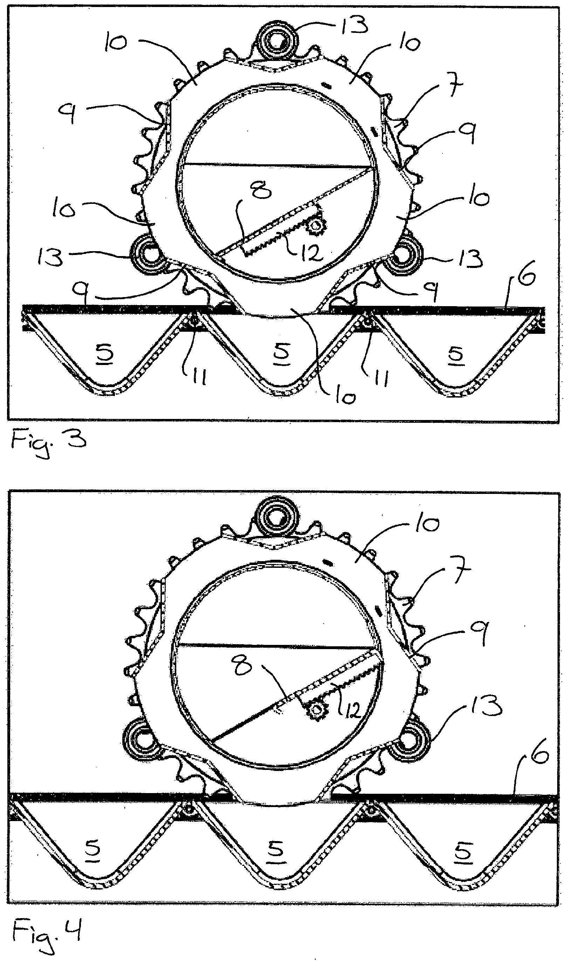

Figs. 3 and 4 show a rotatable dispenser 2 as seen from the side and with closed and open damper 8, respectively. The damper 8 is opened and closed here with a rack means 12 but may readily be operated by other suitable mechanisms. However, the rack 12 provides the very clear advantage over e.g. a pneumatic actuator in that a very controlled regulation of the damper 8 and thereby of the dosed amount of material can be effected. In the shown position of the rotatable dispenser 2, which is a snapshot, is a dosing aperture 10 directed straight towards the centre of a cup 5. At the periphery of the rotatable dispenser 2 appears two support bearings 13 immediately over the chain 6, and yet a support bearing 13 is seen at the top of the rotatable dispenser 2. The rotatable dispenser 2 rests on and is fixed by these support bearings 13 which in principle can be constituted by wheels or roller bearings of suitable type.

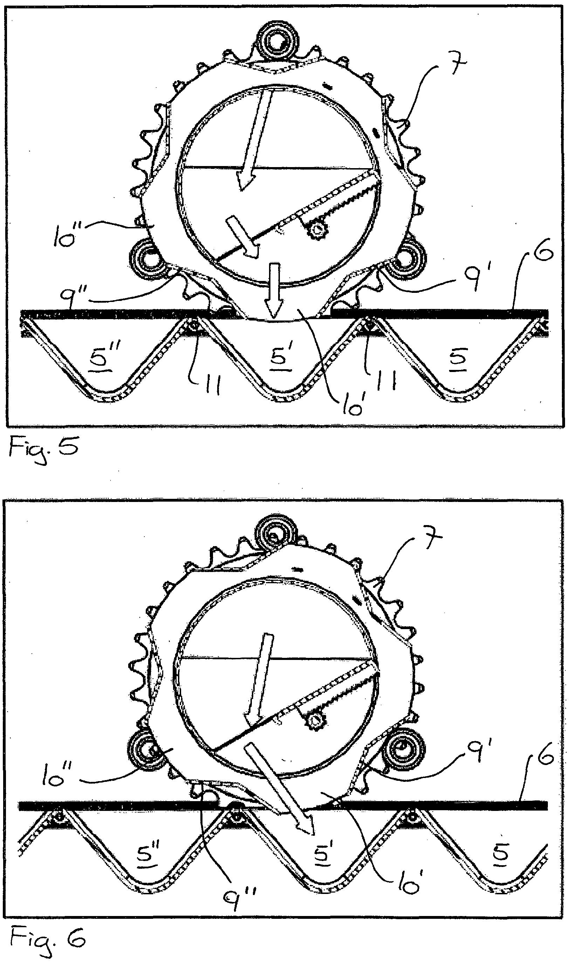

Figs. 5 to 8 show various snapshots of how material flows internally in the rotatable dispenser 2 while it is rotating counter clockwise as the cup conveyor 1 is moving to the right. Fig. 5 shows how a rotatable dispenser 2 as seen from the side and with open damper 8, with arrows showing how material flows in through the not shown access channels 4, through the damper 8 and out between two chutes 9' and 9", through a dosing aperture 10' and down into the cup 5'. The chute 9" in this Figure is on its way to cover the gap 11 between two cups 5' and 5".

In Fig. 6 the cups 5 have moved to the right and the dosing aperture 10' has moved upwards whereby the chute 9" has come to cover even more of the gap 11 between the two cups 5' and 5", and the material still flows out of one dosing aperture 10'.

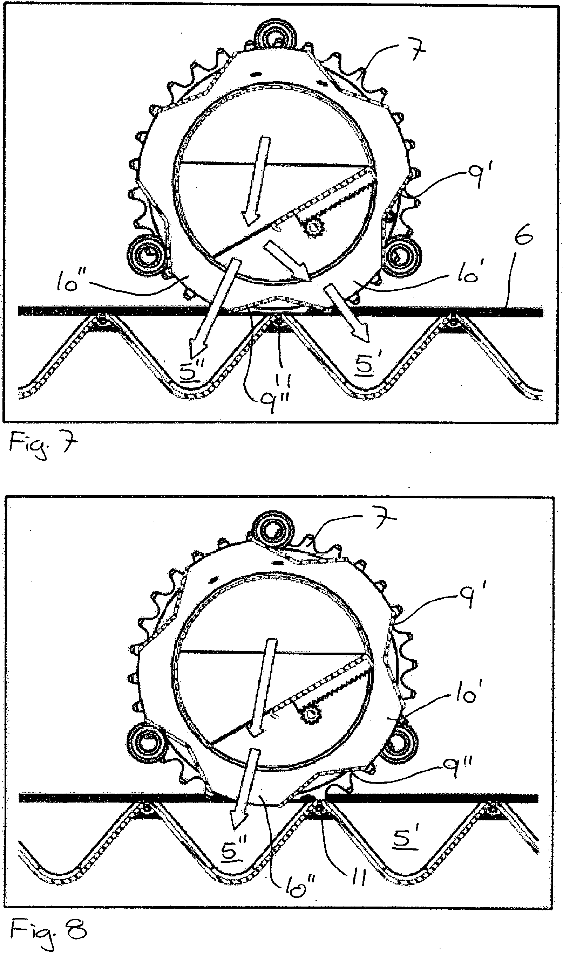

Fig. 7 shows material flow in a third position in the rotatable dispenser 2 wherein the cups 5 are moved even more to the right, and wherein the rotatable dispenser is rotated even more counter clockwise, where the material now flows out of two dosing apertures 10' and 10" and down into two cups 5' and 5" while at the same time the chute 9" is in position over the gap 11 and simultaneously guides material on right course down into cups 5' and 5".

Finally, in Fig. 8 is shown a fourth position in a rotatable dispenser 2 where cups 5 as well as the rotatable dispenser 2 have moved further, and where it is now the subsequent dosing aperture 10" that doses material into the succeeding cup 5".

By a cup conveyor 1 in which is used a rotatable dispenser 2 as indicated here, a cup 5 can be filled in very few seconds, and the next cup 5 and numerous other cups 5 as well can be filled in the same rapid way. It is thus possible to ensure exact disposition of material in a cup 5 simultaneously with spillage being reduced, and maybe most important there is no longer need for an overlap between adjacent cups 5. By adapting the rotatable dispenser 2 such that it is rotated in step with the passing of the cups 5, the chutes 9 can actually be extended such that they extend right down into the cup 5, which in some cases can be advantageous with certain materials.

## Claims

1. A cup conveyor (1) including an apparatus (2) for filling cups in the cup conveyor (1), wherein the cups (5) are interconnected and arranged juxtaposed and thus constitute an endless conveyor belt, wherein a cup (5) at least includes an upwardly facing opening, two opposing end faces and one or more bottom faces and side faces, wherein in the direction of movement of the conveyor belt along the extension of the cup (5) the opening has a leading edge and a trailing edge extending transversely to the direction of movement of the conveyor belt, which is typically substantially horizontal during filling of the cups (5), wherein the apparatus (2) further includes a filling station (2) with an adjustable dosing device (8) from which the material is supplied to the cups (5) via a chute system (9) during their passage of the filling station (2), wherein the filling station (2) of the apparatus includes a rotatable dispenser (2) arranged above the cups (5), wherein means for supplying materials are arranged at the centre of the rotatable dispenser, (2) wherein the rotatable dispenser (2) appears drum-like and includes at least one dosing aperture (10) for dosing material into a cup (5) and a chute (9) at each side of the at least one dosing aperture wherein the apparatus further includes drive means and means for controlling and regulating the at least one dosing aperture (10) and the chutes (9,9',9") in the rotatable dispenser (2) in relation to the positions of the openings in adjacent cups (5) and a trailing edge and a leading edge of two adjacent cups at the filling station (2) when the apparatus is in operation,
**characterised in that** a gap (11) between two adjacent cups (5) is covered by one of the chutes (9);
**in that** between two individual dosing apertures (10) in the rotatable dispenser (2) there is, at an external periphery, a wall in the said drum, the wall, or at least part thereof forming the chutes (9) for the material;
and **in that** the rotatable dispenser (2) includes one or more controllable dampers (8) and one or more access channels (4), wherein the access channel (4) or channels (4) is/are arranged at the end or ends of the rotatable dispenser (2).

2. Cup conveyor according to claim 1, **characterised in that** the drive means for rotating the rotatable dispenser (2) include either an electric motor, a pneumatic or a hydraulic motor, wherein the drive means are controlled and/or regulated relative to the cups (5) in the conveyor belt (1) based on input from one or more electric or mechanical sensors and/or switches.

3. Cup conveyor according to claim 1, **characterised in that** the rotatable dispenser (2) is directly or indirectly mechanically connected with the conveyor belt (1) via one or more gear wheels (7).

4. Cup conveyor according to any of claims 1 to 3, **characterised in that** the rotatable dispenser (2) is suspended by at least two support bearings (13) at one or at either side of the conveyor belt (1), and thus having a rotary axis transversely to the conveyor belt (1).

5. Cup conveyor according to any of claims 1 to 3, **characterised in that** the rotatable dispenser (2) is suspended centrally at at least one of its ends at at least one side of the conveyor belt (1), and thus having a rotary axis transversely to the conveyor belt.

6. Cup conveyor according to any of claims 1 to 5, **characterised in that** the conveyor belt (1) includes a plurality of juxtaposed cups (5), that between a leading edge of one of the cups (5, 5") and a trailing edge of another cup (5, 5") disposed in front thereof there is a spacing, e.g. a spacing of 5 to 10 mm.

7. Cup conveyor according to any of claims 1 to 6, **characterised in that** the conveyor belt (1) includes at least one drive chain or one drive belt (6), that the juxtaposed cups (5) are fixed to this drive chain or drive belt (6), that the rotatable dispenser (2) includes other drive means (7) for direct engagement with the drive chain or drive belt (6).

8. A method for using an a cup conveyor comprising an apparatus (2) for filling cups (5) in the cup conveyor (1) according to any of claims 1 to 7, wherein the method includes filling cups (5) of a cup conveyor (1), wherein a conveyor belt (1) moves in a direction of movement at a given speed, wherein a dosing device (2) at a filling station doses a matching flow of material, wherein the method includes at least the following steps:
- cups (5) connected with a conveyor belt (1) are moved past a dosing device (2) with a rotatable dispenser with one or more dosing apertures (10);
- the rotatable dispenser (2) is rotated concurrently with the position of the cups (5) and so that the dosing aperture or each of the apertures (10, 10', 10") of the rotatable dispenser (2) is always opposite an opening of a cup (5, 5', 5"), and such that a leading edge of one cup (5") and the trailing edge of a different, adjacent cup (5') are covered by the chute system (9, 9', 9") of the dosing device (2); **characterised in that** the rotatable dispenser (2) includes one or more controllable dampers (8) and one or more access channels (4), wherein the access channel or channels (4) is/are arranged at the end or ends of the rotatable dispenser (2) and where the one or more dampers (8) regulate the material supplied to the rotatable dispenser (2), and
- the material is dosed via a specific dosing aperture (10', 10") and supplied to a cup (5', 5") at a specific position.

9. Method according to claim 8, **characterised in that** the rotatable dispenser (2) of the dosing device is driven electrically, pneumatically or hydraulically based on input from one or more electric and/or mechanical sensors and/or switches such that the position of a dosing aperture (10) is in step with the opening of a passing cup (5).

10. Method according to claim 8, **characterised in that** the rotatable dispenser (2) of the dosing device is driven mechanically via a direct or indirect mechanical connection to the conveyor belt such (2) that the position of a dosing aperture (10, 10', 10") is in step with the opening of a passing cup (5, 5', 5").

## Patentansprüche

1. Becherförderer (1) mit einer Vorrichtung (2) zum Abfüllen von Bechern in dem Becherförderer (1), wobei die Becher (5) miteinander verbunden und nebeneinander angeordnet sind und somit ein endloses Förderband bilden, wobei ein Becher (5) mindestens eine nach oben gerichtete Öffnung, zwei entgegengesetzte Stirnseiten und eine oder mehrere Bodenflächen und Seitenflächen aufweist, wobei die Öffnung in der Bewegungsrichtung des Förderbandes entlang der Ausdehnung des Bechers (5) eine vordere Kante und eine hintere Kante aufweist, die sich quer zur Bewegungsrichtung des Förderbandes erstreckt, welche während des Abfüllens der Becher (5) üblicherweise im Wesentlichen horizontal verläuft, wobei die Vorrichtung (2) ferner eine Abfüllstation (2) mit einer einstellbaren Dosiervorrichtung (8) aufweist, aus der das Material über ein Rinnensystem (9) für die Becher (5) während ihres Vorbeiziehens an der Abfüllstation (2) bereitgestellt wird, wobei die Abfüllstation (2) der Vorrichtung einen oberhalb der Becher (5) angeordneten drehbaren Spender (2) aufweist, wobei Mittel zur Bereitstellung von Material in der Mitte des drehbaren Spenders (2) angeordnet sind, wobei der drehbare Spender (2) trommelförmig erscheint und mindestens eine Dosieröffnung (10) zur Dosierung von Material in einen Becher (5) sowie eine Rinne (9) an jeder Seite der mindestens einen Dosieröffnung aufweist, wobei die Vorrichtung ferner Antriebsmittel und Mittel zur Steuerung und Regulierung der mindestens einen Dosieröffnung (10) und der Rinnen (9, 9', 9") in dem drehbaren Spender (2) in Bezug auf die Positionen der Öffnungen in benachbarten Bechern (5) und eine vordere Kante und eine hintere Kante von zwei benachbarten Bechern an der Abfüllstation (2), wenn die Vorrichtung in Betrieb ist, aufweist,
**dadurch gekennzeichnet, dass** ein Spalt (11) zwischen zwei benachbarten Bechern (5) von einer der Rinnen (9) bedeckt ist;
dadurch, dass sich auf einem äußeren Umfang zwischen zwei einzelnen Dosieröffnungen (10) in dem drehbaren Spender (2) eine Wand in der Trommel, der Wand oder mindestens einem Teil davon befindet, die die Rinnen (9) für das Material bildet;
und dadurch, dass der drehbare Spender (2) einen oder mehrere steuerbare Dämpfer (8) und einen oder mehrere Zugangskanäle (4) aufweist, wobei der Zugangskanal (4) oder die Zugangskanäle (4) an dem Ende oder den Enden des drehbaren Spenders (2) angeordnet ist/sind.

2. Becherförderer nach Anspruch 1, **dadurch gekennzeichnet, dass** die Antriebsmittel zum Rotieren des drehbaren Spenders (2) entweder einen Elektromotor, einen pneumatischen oder einen hydraulischen Motor aufweisen, wobei die Antriebsmittel aufgrund einer Eingabe von einem oder mehreren elektrischen oder mechanischen Sensoren und/oder Schaltern relativ zu den Bechern (5) in dem Förderband (1) gesteuert und/oder geregelt werden.

3. Becherförderer nach Anspruch 1, **dadurch gekennzeichnet, dass** der drehbare Spender (2) über ein oder mehrere Zahnräder (7) direkt oder indirekt mechanisch mit dem Förderband (1) verbunden ist.

4. Becherförderer nach einem der Ansprüche 1 bis 3, **dadurch gekennzeichnet, dass** der drehbare Spender (2) an mindestens zwei Stützlagern (13) an einer oder auf jeder Seite des Förderbandes (1) aufgehängt ist und somit eine quer zum Förderband (1) verlaufende Drehachse aufweist.

5. Becherförderer nach einem der Ansprüche 1 bis 3, **dadurch gekennzeichnet, dass** der drehbare Spender (2) mittig an mindestens einem seiner Enden und an mindestens einer Seite des Förderbandes (1) aufgehängt ist und somit eine quer zum Förderband verlaufende Drehachse aufweist.

6. Becherförderer nach einem der Ansprüche 1 bis 5, **dadurch gekennzeichnet, dass** das Förderband (1) eine Vielzahl von nebeneinander angeordneten Bechern (5) aufweist, dass sich zwischen einer vorderen Kante einer der Becher (5, 5") und einer hinteren Kante eines anderen Bechers (5, 5"), der davor angeordnet ist, ein Abstand, z.B. ein Abstand von 5 bis 10 mm, befindet.

7. Becherförderer nach einem der Ansprüche 1 bis 6, **dadurch gekennzeichnet, dass** das Förderband (1) mindestens eine Antriebskette oder einen Antriebsriemen (6) aufweist, dass die nebeneinander angeordneten Becher (5) an dieser Antriebskette oder diesem Antriebsriemen (6) befestigt sind, dass der drehbare Spender (2) weitere Antriebsmittel (7) für einen direkten Eingriff mit der Antriebskette oder dem Antriebsriemen (6) aufweist.

8. Verfahren zur Verwendung eines Becherförderers, umfassend eine Vorrichtung (2) zum Abfüllen von Bechern (5) in dem Becherförderer (1) nach einem der Ansprüche 1 bis 7, wobei das Verfahren das Abfüllen von Bechern (5) eines Becherförderers (1) aufweist, wobei ein Förderband (1) sich mit einer vorgegebenen Geschwindigkeit in eine Bewegungsrichtung bewegt, wobei eine Dosiervorrichtung (2) an einer Abfüllstation einen entsprechenden Materialstrom dosiert, wobei das Verfahren mindestens folgende Schritte aufweist:
- Becher (5), die mit einem Förderband (1) verbunden sind, werden über eine Dosiervorrichtung (2) mit einem drehbaren Spender mit einer oder mehreren Dosieröffnungen (10) bewegt;
- der drehbare Spender (2) wird zusammen mit der Position der Becher (5) gedreht, so dass die Dosieröffnung oder jede der Öffnungen (10, 10', 10") des drehbaren Spenders (2) sich immer gegenüber einer Öffnung eines Bechers (5, 5', 5") befindet, und so dass eine vordere Kante eines Bechers (5") und die hintere Kante eines anderen, benachbarten Bechers (5') von dem Rinnensystem (9, 9', 9") der Dosiervorrichtung (2) bedeckt werden; **dadurch gekennzeichnet, dass** der drehbare Spender (2) einen oder mehrere steuerbare Dämpfer (8) und einen oder mehrere Zugangskanäle (4) aufweist, wobei der Zugangskanal oder die Zugangskanäle (4) an dem Ende oder den Enden des drehbaren Spenders (2) angeordnet ist/sind und wobei der eine oder die mehreren Dämpfer (8) das an den drehbaren Spender (2) bereitgestellte Material steuern, und
- das Material wird über eine spezifische Dosieröffnung (10', 10") dosiert und einem Becher (5', 5") an einer spezifischen Position bereitgestellt.

9. Verfahren nach Anspruch 8, **dadurch gekennzeichnet, dass** der drehbare Spender (2) der Dosiervorrichtung elektrisch, pneumatisch oder hydraulisch aufgrund einer Eingabe von einem oder mehreren elektrischen und/oder mechanischen Sensoren und/oder Schaltern angetrieben wird, so dass die Position einer Dosieröffnung (10) mit der Öffnung eines vorbeiziehenden Bechers (5) übereinstimmt.

10. Verfahren nach Anspruch 8, **dadurch gekennzeichnet, dass** der drehbare Spender (2) der Dosiervorrichtung mechanisch über eine direkte oder indirekte mechanische Verbindung mit dem Förderband (2) angetrieben wird, so dass die Position einer Dosieröffnung (10, 10', 10") mit der Öffnung eines vorbeiziehenden Bechers (5, 5', 5") übereinstimmt.

## Revendications

1. Transporteur de coupelle (1) comportant un appareil (2) pour remplir des coupelles dans le transporteur de coupelle (1), dans lequel les coupelles (5) sont reliées entre elles et agencées juxtaposées et constituent ainsi une bande transporteuse sans fin, dans lequel une coupelle (5) comporte au moins une ouverture orientée vers le haut, deux faces d'extrémité opposées et une ou plusieurs faces inférieures et faces latérales, dans lequel dans la direction du mouvement de la bande transporteuse le long de l'extension de la coupe (5), l'ouverture possède un bord avant et un bord arrière s'étendant transversalement à la direction de mouvement de la bande transporteuse qui est typiquement sensiblement horizontale pendant le remplissage des coupelles (5), dans lequel l'appareil (2) comporte en outre un poste de remplissage (2) avec un dispositif de dosage ajustable (8), duquel le matériau est fourni aux coupelles (5) via un système de déversement (9) pendant leur passage du poste de remplissage (2), dans lequel le poste de remplissage (2) de l'appareil comporte un distributeur rotatif (2) agencé au-dessus des coupelles (5), dans lequel des moyens pour amener des matériaux sont agencés au centre du distributeur rotatif (2), dans lequel le distributeur rotatif (2) ressemble à un tambour et comporte au moins une ouverture de dosage (10) pour le dosage de matériau dans une coupelle (5) et une goulotte de déversement (9) sur chaque côté de l'au moins une ouverture de dosage, dans lequel l'appareil comporte en outre des moyens d'entraînement et des moyens pour contrôler et réguler l'au moins une ouverture de dosage (10) et les goulottes de déversement (9, 9', 9") dans le distributeur rotatif (2) par rapport aux positions des ouvertures dans des coupelles adjacentes (5) et un bord arrière et un bord avant de deux coupelles adjacentes sur le poste de remplissage (2) lorsque l'appareil est en fonctionnement,
**caractérisé en ce qu'**une fente (11) entre deux coupelles adjacentes (5) est couverte par l'une des goulottes de déversement (9) ;
**en ce qu'**entre deux ouvertures de dosage individuelles (10) dans le distributeur rotatif (2), il y a sur une périphérie externe, une paroi dans ledit tambour, la paroi ou au moins une partie de celle-ci formant les goulottes de déversement (9) pour le matériau ;
et **en ce que** le distributeur rotatif (2) comporte un ou plusieurs amortisseurs contrôlables (8) et un ou plusieurs canaux d'accès (4), dans lequel le canal (4) ou les canaux d'accès (4) est/sont agencé(s) sur l'extrémité ou les extrémités du distributeur rotatif (2).

2. Transporteur de coupelle selon la revendication 1, **caractérisé en ce que** les moyens d'entraînement pour la rotation du distributeur rotatif (2) comportent un moteur électrique, un moteur pneumatique ou un moteur hydraulique, dans lequel les moyens d'entraînement sont contrôlés et/ou régulés par rapport aux coupelles (5) dans la bande transporteuse (1) sur la base d'une entrée d'un ou de plusieurs capteurs et/ou commutateurs électriques ou mécaniques.

3. Transporteur de coupelle selon la revendication 1, **caractérisé en ce que** le distributeur rotatif (2) est mécaniquement relié directement ou indirectement à la bande transporteuse (1) via une ou plusieurs roues d'engrenage (7).

4. Transporteur de coupelle selon l'une quelconque des revendications 1 à 3, **caractérisé en ce que** le distributeur rotatif (2) est suspendu par au moins deux paliers de support (13) sur l'un ou l'autre côté de la bande transporteuse (1) et présentant ainsi un axe rotatif transversal à la bande transporteuse (1).

5. Transporteur de coupelle selon l'une quelconque des revendications 1 à 3, **caractérisé en ce que** le distributeur rotatif (2) est suspendu centralement à au moins une de ses extrémités sur au moins un côté de la bande transporteuse (1), et présentant ainsi un axe rotatif transversal à la bande transporteuse.

6. Transporteur de coupelle selon l'une quelconque des revendications 1 à 5, **caractérisé en ce que** la bande transporteuse (1) comporte une pluralité de coupelles juxtaposées (5), **en ce qu'**entre un bord avant d'une des coupelles (5, 5") et un bord arrière d'une autre coupelle (5, 5") agencée en face de celle-ci, il y a un espacement, par exemple un espacement de 5 à 10 mm.

7. Transporteur de coupelle selon l'une quelconque des revendications 1 à 6, **caractérisé en ce que** la bande transporteuse (1) comporte au moins une chaîne d'entraînement ou une sangle d'entraînement (6), **en ce que** les coupelles juxtaposées (5) sont fixées à cette chaîne ou bande d'entraînement (6), **en ce que** le distributeur rotatif (2) comporte d'autres moyens d'entraînement (7) pour l'engagement direct avec la chaîne ou bande d'entraînement (6).

8. Procédé d'utilisation d'un transporteur de coupelle comprenant un appareil (2) pour le remplissage de coupelles (5) dans le transporteur de coupelle (1) selon l'une quelconque des revendications 1 à 7, dans lequel le procédé comporte le remplissage de coupelles (5) d'un transporteur de coupelle (1), dans lequel une bande transporteuse (1) se déplace dans une direction de mouvement à une vitesse donnée, dans lequel un dispositif de dosage (2) à un poste de remplissage dose un flux correspondant de matériau, dans lequel le procédé comporte au moins les étapes suivantes :
- des coupelles (5) reliées à une bande transporteuse (1) sont déplacées devant un dispositif de dosage (2) avec un distributeur rotatif avec une ou plusieurs ouvertures de dosage (10) ;
- le distributeur rotatif (2) est tourné conjointement avec la position des coupelles (5) et de sorte que l'ouverture de dosage ou chacune des ouvertures (10, 10', 10'') du distributeur rotatif (2) soit toujours opposée à une ouverture d'une coupelle (5, 5', 5'') et de sorte qu'un bord avant d'une coupelle (5'') et le bord arrière d'une coupelle adjacente différente (5') soient couverts par le système de déversement (9, 9', 9'') du dispositif de dosage (2) ; **caractérisé en ce que** le distributeur rotatif (2) comporte un ou plusieurs amortisseurs contrôlables (8) et un ou plusieurs canaux d'accès (4), dans lequel le ou les canaux d'accès (4) est/sont agencé(s) à l'extrémité ou aux extrémités du distributeur rotatif (2) et où les un ou plusieurs amortisseurs (8) régulent le matériau fourni au distributeur rotatif (2) et
- le matériau est dosé via une ouverture de dosage spécifique (10', 10'') et fourni à une coupelle (5', 5'') à une position spécifique.

9. Procédé selon la revendication 8, **caractérisé en ce que** le distributeur rotatif (2) du dispositif de dosage est entraîné par voie électrique, pneumatique ou hydraulique sur la base d'une entrée d'un ou de plusieurs capteurs et/ou commutateurs électriques et/ou mécaniques de sorte que la position d'une ouverture de dosage (10) soit en phase avec l'ouverture d'une coupelle passante (5).

10. Procédé selon la revendication 8, **caractérisé en ce que** le distributeur rotatif (2) du dispositif de dosage est mécaniquement entraîné via une liaison mécanique directe ou indirecte avec la bande transporteuse (2) de sorte que la position d'une ouverture de dosage (10, 10', 10'') soit en phase avec l'ouverture d'une coupelle passante (5, 5', 5'').
